(19) 

**Europäisches Patentamt**
**European Patent Office**
**Office européen des brevets**

(11) **EP 3 196 406 B1**

(12) **EUROPEAN PATENT SPECIFICATION**

(45) Date of publication and mention
of the grant of the patent:
**22.08.2018 Bulletin 2018/34**

(51) Int Cl.:
***E21B 44/00*** *(2006.01)*

(21) Application number: **17160313.7**

(22) Date of filing: **22.10.2013**

(54) **METHOD OF AUTOMATICALLY DETERMINING OFF-BOTTOM DRILLSTRING TORQUE**

VERFAHREN ZUR AUTOMATISCHEN BESTIMMUNG DES DREHMOMENTS EINES
BOHRGESTÄNGES BEIM DREHEN VOM BODEN WEG

MÉTHODE DE DÉTERMINATION AUTOMATIQUE DU COUPLE APPLIQUÉ À UN TRAIN DE TIGES
DE FORAGE DANS UNE POSITION ÉCARTÉE DU FOND DE PUITS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.11.2012 US 201261725900 P**

(43) Date of publication of application:
**26.07.2017 Bulletin 2017/30**

(62) Document number(s) of the earlier application(s) in
accordance with Art. 76 EPC:
**13854431.7 / 2 920 400**

(73) Proprietor: **ExxonMobil Upstream Research
Company
Spring TX 77389 (US)**

(72) Inventors:
• **WANG, Lei
The Woodlands, TX 77381 (US)**
• **BAILEY, Jeffrey R.
Houston, TX 77019 (US)**
• **O'DONNELL, Brian J.
Houston, TX 77098 (US)**
• **CHANG, Dar-Lon
Sugar Land, TX 77479 (US)**
• **PAYETTE, Gregory S.
Spring, TX 77386 (US)**

(74) Representative: **ExxonMobil Chemical Europe Inc.
IP Law Europe
Hermeslaan 2
1831 Machelen (BE)**

(56) References cited:
**WO-A2-2011/130159 US-A- 5 474 142**

Description

## CROSS REFERENCE TO RELATED APPLICATIONS

This application claims the benefit of U.S. Provisional Patent Application No. 61/725,900, filed November 13, 2012.

## FIELD

The present techniques relate generally to systems and methods for detecting downhole drilling dysfunctions from surface recorded drilling data. More particularly, the present disclosure relates to systems and methods that may be implemented in hydrocarbon-related drilling operations.

## BACKGROUND

The production of hydrocarbons, such as oil and gas, has been performed for many years. To produce these hydrocarbons, one or more wells in a field are drilled to a subsurface location which is generally referred to as a subterranean formation or basin. The process of producing hydrocarbons from the subsurface location typically involves various development phases from a concept selection phase to a production phase. One of the development phases involves the drilling operations that form a fluid conduit from the surface to the subsurface location. The drilling operations may involve using different equipment, such as hydraulic systems, drill pipe, drill bits, mud motors, etc., which are utilized to drill to a target depth.

Bit balling has been identified as a primary cause of ineffective bit performance when drilling shale with water based mud. It can also be problematic when drilling certain carbonate formations. Bit balling is a result of cohesion between the cuttings, creating a blockage in the open slot areas of a bit. Basically, there are two phases of bit balling: reversible and irreversible. Reversible or incipient bit balling may be mitigated by reducing weight-on-bit (WOB) and washing the bit off-bottom. Irreversible bit balling refers to severe balling that may require tripping-out to clean the bit. It may only take about 10-15 minutes of continued drilling for reversible bit balling to become irreversible if no mitigation action is conducted. Therefore, it is crucial to detect the reversible bit balling on time and take mitigation actions immediately. This can potentially provide substantial economic benefits including saving trips and reducing drilling cost.

With the increasing development of unconventional resources, such as shale gas fields, bit balling detection and mitigation plays an increasingly important role. Therefore, the petroleum industry has worked at developing methods for detecting bit balling and other drilling dysfunctions. One approach to evaluate the risk of balling is based on the cation exchange capacity (CEC). The bit balling severity is related to the electrochemical properties of the shale, which can be represented by the CEC (Journal of Canadian Petroleum Technology 45(6):26-30). However, this method depends on empirical relations between drilling data and the CEC, so it may not be easy to extend it from one field to other fields. Also, it does not provide a real-time indicator of irreversible bit balling as it occurs during the drilling operation.

Another approach is based on monitoring data of drilling mechanics such as rate of penetration (ROP), mechanical specific energy (MSE), torque, weight-on-bit (WOB), and the like. Field and lab observations show that when a bit balling event occurs: (1) torque drops; and (2) ROP decreases significantly and subsequently does not respond to changes in WOB, flow rate, or rotary speed RPM (revolutions per minute) (SPE 19926). U.S. Patent Nos. 7,857,047 and 7,896,105 show an example of detecting severe bit balling by tracking MSE.

U.S. Patent No. 7,857,047 discloses a method associated with the production of hydrocarbons. In one embodiment, a method is described that includes drilling a well to a subsurface location in a field to provide fluid flow paths for hydrocarbons to a production facility. Mechanical specific energy (MSE) data and other data are measured during the drilling operations. The MSE and additional drilling data are used to determine the existence of at least one limiter. The lithology data for the well is obtained and examined, and a primary limiter is identified based on the lithology data. Drilling operations are adjusted to mitigate at least one limiter.

U.S. Patent No. 7,896,105 discloses a method of drilling and producing hydrocarbons from subsurface formations. In one embodiment, a method is described that includes drilling a well to a subsurface location in the field to provide fluid flow paths for hydrocarbons to a production facility. The drilling is performed by estimating a drill rate for a well and determining a difference between the estimated drill rate and an actual drill rate. Mechanical specific energy (MSE) data and other measured data are obtained during the drilling of the well. The MSE data and other data are used to determine one of a number of limiters that limit the drill rate. Drilling operations are adjusted to mitigate one of the limiters. The operations are repeated until the subsurface formation has been reached by the drilling operations.

MSE is equal to the ratio of mechanical energy input to the volume of rock that is removed by the bit. Therefore, MSE is also sensitive to rock strength and other drilling dysfunctions such as bottom hole assembly (BHA) whirl and stick-slip. However, in order to detect incipient bit balling, a local parameter that is more sensitive to the bit performance and less sensitive to the rock strength would be useful.

Recent developments in data acquisition techniques facilitate surveillance of drilling based on collected data. Many surface data acquisition systems at a rig can provide relatively high definition with a sampling rate typically at 1 Hz, or sometimes even higher at 10 Hz. Commonly available surface data channels include RPM, WOB, torque, ROP, MSE, flow rate, standpipe pressure, hole depth, bit depth, and the like. In addition, downhole drilling data using a measurement-while-drilling (MWD) device offers more direct measurements for the bit status. The sampling rate of an MWD may be much higher than that of surface data, typically from 50 Hz up to 4 kHz, although updates to the surface of this downhole data is typically much slower, at typically several tens of seconds between MWD channel updates.

Therefore, surface data based detection still has advantages over downhole MWD tools. The low data transmission rate of mud telemetry is the bottleneck of downhole data applications. In addition to the data rate issue, surface data based detection is achieved at lower cost because MWD is expensive to operate and the tools may be lost downhole. Surface measurements can substantially benefit drilling for unconventional resources (shale gas) by reducing costs and simplifying drillstrings. These techniques can be implemented by the use of data driven advisory systems.

Examples of data-driven based advisory systems are described in International Patent Application Publication Nos. WO/2011/016927 and WO/2011/0216928. These applications disclose systems and methods that utilize objective functions. The methods and systems for controlling drilling operations include using a statistical model to identify at least one controllable drilling parameter having significant correlation to an objective function incorporating two or more drilling performance measurements. Operational recommendations are generated for at least one controllable drilling parameter based, at least in part, on the statistical model. The operational recommendations are selected to optimize the objective function. Another example is U. S. Patent No. 5 474 142 (B. J. Bowden) which discloses an automatic drilling system that regulates the drill string of a drilling rig in response to any one of, any combination of, or all of drilling fluid pressure, bit weight, drill string torque, and drill string RPM to achieve an optimal rate of bit penetration.

## SUMMARY

The present invention provides a method of automatically determining off-bottom drillstring torque. The method includes receiving data regarding a number of drilling parameters characterizing a wellbore drilling operation, wherein the plurality of drilling parameters include a surface torque, a drillstring rotary speed (RPM, revolutions per minute), a weight on bit (WOB), a hole depth and a bit depth. The surface torque is recorded as an off-bottom drillstring torque data point if: the bit depth is less than the hole depth; the RPM is within a target range; and the WOB is less than a threshold value. The off-bottom drillstring torque is calculated as a function of depth from a plurality of off-bottom drillstring torque data points.

## DESCRIPTION OF THE DRAWINGS

The advantages of the present techniques are better understood by referring to the following detailed description and the attached drawings, in which:

Fig. 1 is a drawing of a drilling operation **100** for forming a wellbore **102** to a formation **104;**

Figs. **2A** and **2B** are drawings showing the occurrence of bit balling during a drilling operation **100;**

Fig. **3** is a schematic of a drilling rig **300** that is equipped for detecting a downhole bit dysfunction;

Fig. **4** is a process flow diagram of a method of detecting a downhole bit dysfunction in a drill bit penetrating a subterranean formation;

Fig. **5** is a process flow diagram of a method **500** for automatically determining off-bottom drillstring torque $TQ_0$ for a non-motorized drilling operation;

Figs. **6A and 6B** are plots illustrating the automatic extraction of the off-bottom torque $TQ_0$ from the surface torque $TQ_s$;

Fig. **7** is a plot illustrating changes in the bit aggressiveness ($\mu$) and other drilling parameters in the time domain for an incipient bit balling event;

Figs. **8A and 8B** are plots illustrating changes in the bit aggressiveness ($\mu$) and other drilling parameters in time domain for stick-slip events and bit wearing events;

Figs. **9A - 9D** are diagnostic plots of $\mu$ against DOC, illustrating the differences between normal drilling and bit dysfunctions;

Fig. **10** is a block diagram of a method for using a diagnostic plot of $\mu$ in a phase plane ($\mu$ vs. $\dot{\mu}$);

Figs. **11A-11C** are plots illustrating severe stick-slip events on the diagnostic phase plane of $\mu$ vs. $\dot{\mu}$; and

Figs. **12A-12C** are plots illustrating low stick-slip events on the diagnostic phase plane of $\mu$ vs. $\dot{\mu}$.

For simplicity and clarity of illustration, elements shown in the drawings have not necessarily been drawn to scale. For example, the dimensions of some of the elements may be exaggerated relative to other elements for clarity. Further, where considered appropriate, reference numerals may be repeated among the drawings to indicate corresponding or analogous elements.

## DETAILED DESCRIPTION

In the following detailed description section, the specific embodiments of the present techniques are described in connection with exemplary embodiments. However, to the extent that the following description is specific to a particular embodiment or a particular use of the present techniques, this is intended to be for exemplary purposes only and simply provides a description of the exemplary embodiments. Accordingly, the present techniques are not limited to the specific embodiments described below, but rather, such techniques include all alternatives, modifications, and equivalents falling within the scope of the appended claims.

At the outset, and for ease of reference, certain terms used in this application and their meanings as used in this context are set forth. To the extent a term used herein is not defined below, it should be given the broadest definition persons in the pertinent art have given that term as reflected in at least one printed publication or issued patent. Further, the present techniques are not limited by the usage of the terms shown below, as all equivalents, synonyms, new developments, and terms or techniques that serve the same or a similar purpose are considered to be within the scope of the present claims.

"Directional drilling" is the intentional deviation of the wellbore from the path it would naturally take. In other words, directional drilling is the steering of the drill string so that it travels in a desired direction. Directional drilling can be used for increasing the drainage of a particular well, for example, by forming deviated branch bores from a primary borehole. Directional drilling is also useful in the marine environment where a single offshore production platform can reach several hydrocarbon bearing subterranean formations or reservoirs by utilizing a plurality of deviated wells that can extend in any direction from the drilling platform. Directional drilling also enables horizontal drilling through a reservoir to form a horizontal wellbore. As used herein, "horizontal wellbore" represents the portion of a wellbore in a subterranean zone to be completed which is substantially horizontal or at an angle from vertical in the range of from about 45 ° to about 135 °. A horizontal wellbore may have a longer section of the wellbore traversing the payzone of a reservoir, thereby permitting increases in the production rate from the well.

A "facility" is a tangible piece of physical equipment, or group of equipment units, through which hydrocarbon fluids are either produced from a reservoir or injected into a reservoir. In its broadest sense, the term facility is applied to any equipment that may be present along the flow path between a reservoir and its delivery outlets. Facilities may comprise production wells, injection wells, well tubulars, wellhead equipment, gathering lines, manifolds, pumps, compressors, separators, surface flow lines, and delivery outlets. In some instances, the term "surface facility" is used to distinguish those facilities other than wells.

"Formation" refers to a body or section of geologic strata, structure, formation, or other subsurface solids or collected material that is sufficiently distinctive and continuous with respect to other geologic strata or other characteristics that it can be mapped, for example, by seismic techniques. A formation can be a body of geologic strata of predominantly one type of rock or a combination of types of rock, or a fraction of strata having substantially common set of characteristics. A formation can contain one or more hydrocarbon-bearing subterranean formations. Note that the terms formation, hydrocarbon bearing subterranean formation, reservoir, and interval may be used interchangeably, but may generally be used to denote progressively smaller subsurface regions, zones, or volumes. More specifically, a geologic formation may generally be the largest subsurface region, a hydrocarbon reservoir or subterranean formation may generally be a region within the geologic formation and may generally be a hydrocarbon-bearing zone, a formation, reservoir, or interval having oil, gas, heavy oil, and any combination thereof. An interval or production interval may generally refer to a sub-region or portion of a reservoir. A hydrocarbon-bearing zone, or production formation, may be separated from other hydrocarbon-bearing zones by zones of lower permeability such as mudstones, shales, or shale-like (highly compacted) sands. In one or more embodiments, a hydrocarbon-bearing zone may include heavy oil in addition to sand, clay, or other porous solids.

"Hydrocarbon production" refers to any activity associated with extracting hydrocarbons from a well or other opening. Hydrocarbon production normally refers to any activity conducted in or on the well after the well is completed. Accordingly, hydrocarbon production or extraction includes not only primary hydrocarbon extraction but also secondary and tertiary production techniques, such as injection of gas or liquid for increasing drive pressure, mobilizing the hydrocarbon or treating by, for example chemicals or hydraulic fracturing the wellbore to promote increased flow, well servicing, well logging, and other well and wellbore treatments.

"Hydrocarbons" are generally defined as molecules formed primarily of carbon and hydrogen atoms such as oil and natural gas. Hydrocarbons may also include other elements, such as, but not limited to, halogens, metallic elements, nitrogen, oxygen, and/or sulfur. Hydrocarbons may be produced from hydrocarbon bearing subterranean formations through wells penetrating a hydrocarbon containing formation. Hydrocarbons derived from a hydrocarbon bearing subterranean formation may include, but are not limited to, kerogen, bitumen, pyrobitumen, asphaltenes, oils, natural gas, or combinations thereof. Hydrocarbons may be located within or adjacent to mineral matrices within the earth. Matrices may include, but are not limited to, sedimentary rock, sands, silicilytes, carbonates, diatomites, and other porous media.

"Natural gas" refers to various compositions of raw or treated hydrocarbon gases. Raw natural gas is primarily comprised of light hydrocarbons such as methane, ethane, propane, butanes, pentanes, hexanes and impurities like benzene, but may also contain small amounts of non-hydrocarbon impurities, such as nitrogen, hydrogen sulfide, carbon dioxide, and traces of helium, carbonyl sulfide, various mercaptans, or water. Treated natural gas is primarily comprised of methane and ethane, but may also contain small percentages of heavier hydrocarbons, such as propane, butanes, and pentanes, as well as small percentages of nitrogen and carbon dioxide.

"Overburden" refers to the subsurface formation overlying the formation containing one or more hydrocarbon-bearing zones (the reservoirs). For example, overburden may include rock, shale, mudstone, or wet/tight carbonate (such as an impermeable carbonate without hydrocarbons). An overburden may include a hydrocarbon-containing layer that is relatively impermeable. In some cases, the overburden may be permeable.

"Permeability" is the capacity of a formation to transmit fluids through the interconnected pore spaces of the rock. Permeability may be measured using Darcy's Law: $Q = (k \Delta P A) / (\mu L)$, where $Q$ = flow rate ($cm^3$/s), $\Delta P$ = pressure drop (atm) across a cylinder having a length $L$ (cm) and a cross-sectional area $A$ ($cm^2$), $\mu$ = fluid viscosity (cp), and $k$ = permeability (Darcy). The customary unit of measurement for permeability is the millidarcy. The term "relatively permeable" is defined, with respect to formations or portions thereof, as an average permeability of 10 millidarcy or more (for example, 10 or 100 millidarcy). The term "relatively low permeability" is defined, with respect to formations or portions thereof, as an average permeability of less than about 10 millidarcy. An impermeable layer generally has a permeability of less than about 0.1 millidarcy. By these definitions, shale may be considered impermeable, for example, ranging from about 0.1 millidarcy (100 microdarcy) to as low as 0.00001 millidarcy (10 nanodarcy).

"Pressure" refers to a force acting on a unit area. Pressure is usually provided in units of pounds per square inch (psi). "Atmospheric pressure" refers to the local pressure of the air. Local atmospheric pressure is assumed to be 0.101 MPa (14.7 psia) the standard atmospheric pressure at sea level. "Absolute pressure" (psia) refers to the sum of the atmospheric pressure plus the gauge pressure (psig). "Gauge pressure" (psig) refers to the pressure measured by a gauge, which indicates only the pressure exceeding the local atmospheric pressure (a gauge pressure of 0 MPa (0 psig) corresponds to an absolute pressure of 0.101 MPa (14.7 psig)).

As previously mentioned, a "reservoir" or "hydrocarbon reservoir" is defined as a pay zone or production interval (for example, a hydrocarbon bearing subterranean formation) that includes sandstone, limestone, chalk, coal, and some types of shale. Pay zones can vary in thickness from less than 0.3048 m (one foot) to hundreds of hundreds of meters (hundreds of feet). The permeability of the reservoir formation provides the potential for production.

"Shale" is a fine-grained clastic sedimentary rock that may be found in formations, and may often have a mean grain size of less than 0.0625 mm. Shale typically includes laminated and fissile siltstones and claystones. These materials may be formed from clays, quartz, and other minerals that are found in fine-grained rocks. Non-limiting examples of shales include Barnett, Fayetteville, and Woodford in North America. Because of its high clay content, shale tends to absorb water from a water-based drilling mud which results in swelling and wellbore failure. Further, cuttings from drilling in shales can agglomerate and plug off the drilling fluid passages of a drill bit, termed "bit balling" because, on retrieval to surface, the bit is covered by a "ball" of cuttings and drilling fluid. Bit balling is more common in water-based fluids but can occur with non-aqueous fluids.

"Substantial" when used in reference to a quantity or amount of a material, or a specific characteristic thereof, refers to an amount that is sufficient to provide an effect that the material or characteristic was intended to provide. The exact degree of deviation allowable may in some cases depend on the specific context.

"Tight oil" is used to reference formations with relatively low matrix permeability, porosity, or both, where liquid hydrocarbon production potential exists. In these formations, liquid hydrocarbon production may also include natural gas condensate.

"Underburden" refers to the subsurface formation below or farther downhole than a formation containing one or more hydrocarbon-bearing zones, e.g., a hydrocarbon reservoir. For example, underburden may include rock, shale, mudstone, or a wet/tight carbonate, such as an impermeable carbonate without hydrocarbons. An underburden may include a hydrocarbon-containing layer that is relatively impermeable. In some cases, the underburden may be permeable. The underburden may be a formation that is distinct from the hydrocarbon bearing formation or may be a selected fraction within a common formation shared between the underburden portion and the hydrocarbon bearing portion. Intermediate layers may also reside between the underburden layer and the hydrocarbon bearing zone.

Overview

Techniques described herein disclose empirical methods and systems for detecting drilling dysfunctions, such as bit balling and stick-slip, from surface data obtained during drilling operations. As used herein, bit balling is the plugging of parts of a drill bit that may force a stop in operations to allow the drill bit to be pulled from a well for cleaning or exchange. As used herein, stick-slip is a torsional vibration of the bit and drill string that occurs because the bit and string momentarily slow down, or even stop, while the rotary drive equipment at the surface continues to turn. When the bit is released, its rotational speed can exceed two times the surface rotary speed, so the bit oscillates from a slow to a high rotary speed while the pipe at surface is rotating with a nearly constant rotary speed. The techniques may also be extended to monitor other bit dysfunctions including bit wear and dulling. The techniques described may be used in both conventional rotary drilling and in drilling using a downhole motor. Downhole MWD tools and calculations using drillstring models are not required because the present technique uses data measured at the surface. The method can be used for post-drilling analysis with offline data and also for real-time monitoring during drilling operations.

The techniques described herein may be used to make recommendations for controlling drilling operating parameters from surface data, for example, using a drilling advisory system. An advisory system may use a principal component analysis (PCA) method to compute the correlations between controllable drilling parameters and an objective function. This objective function can be either single-variable based performance measurement (MSE, ROP, Depth of Cut (DOC), or bit friction factor $\mu$ "mu") or a mathematical combination of these and other performance variables such as vibration measurements. One element of those methods is related to identification of a change in drilling conditions, at which time the stored data may require a refresh or some other action may be necessary. The present invention provides a set of techniques to identify the occurrence and type of dysfunction(s) that affect the drilling process.

In one embodiment, a two-dimensional (2D) data representation is created in which bit aggressiveness $\mu$ is on one axis and depth-of-cut (DOC), or another drilling parameter that is sensitive to drilling dysfunction, is on the other axis. Analysis of the 2D data representation, for example, using techniques such as principal component analysis (PCA) or other eigenvalue analysis methods, may be used to extract diagnostic features from the windowed data.

As surface data is used for the method, a technique is disclosed to allow an automatic extraction of off-bottom torque $TQ_0$ from the surface torque measurements $TQ_s$ to enable the method to be operated without downhole torque measurements. A regression method is proposed to build an empirical model for $TQ_0$ as a function of measured depth.

In various embodiments, a dynamic value for bit aggressiveness ($\mu$) is calculated at each of a number of particular times (t). The bit aggressiveness $\mu$ can then be monitored, for example, using the 2D data representation, or in the time or depth domains, to identify bit dysfunctions.

In some embodiments, the time derivatives of bit aggressiveness $\mu$, or another diagnostic drilling parameter, may be calculated and used for one or more of the axes of the diagnostic plot. A principal component analysis or eigenvalue analysis of this data plotted in this way may also be calculated to determine the characteristics of this plot, sometimes referred to as a phase plane plot.

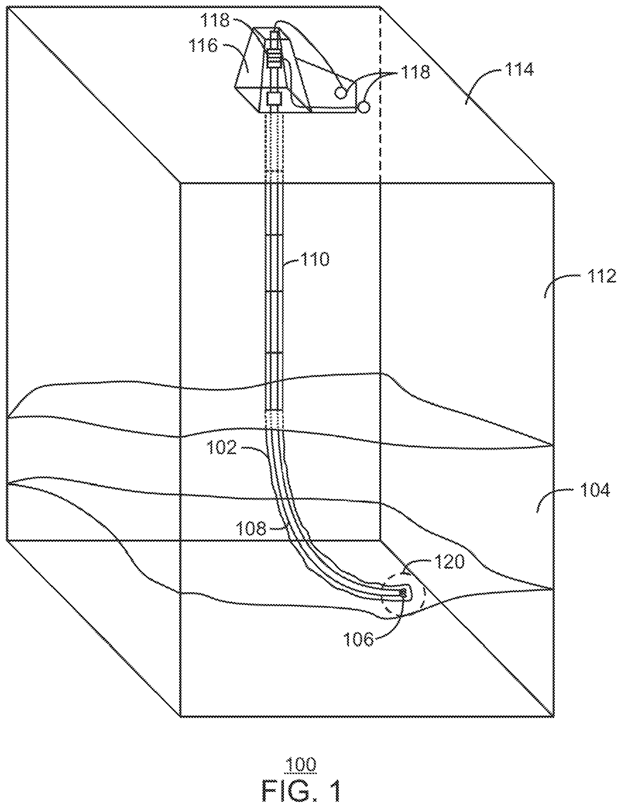

**Fig. 1** is a drawing of a drilling operation **100** for forming a wellbore **102** to a formation **104.** The drilling operation **100** is conducted by a drill bit **106** that is attached to a drillstring **108.** The drill bit **106** can be unpowered, using rotation of the drillstring **108** at the surface to power the drilling process **100.** In some embodiments, the drill bit **106** can include a mud motor that is powered by fluid flow through the drillstring **108.** Casing segments **110** are generally installed along the wellbore **102** after drilling, for example, through the overburden **112.**

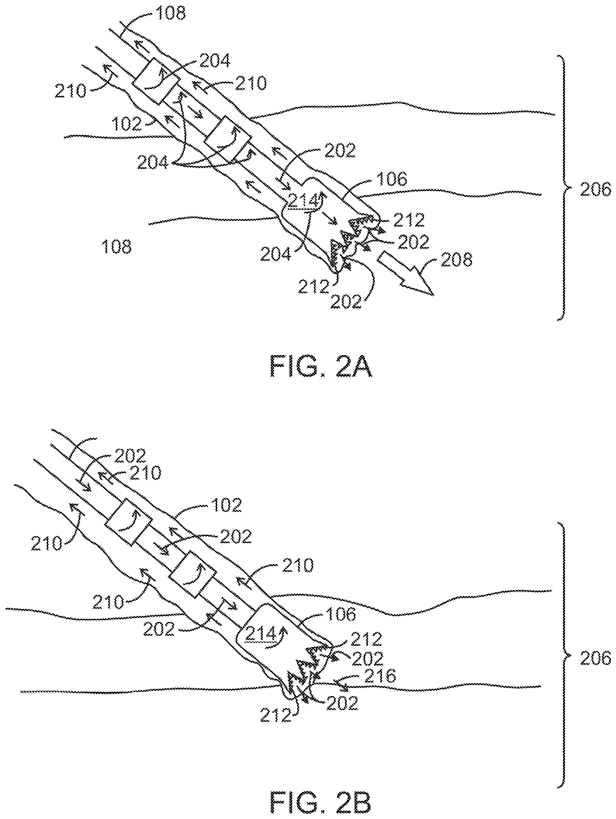

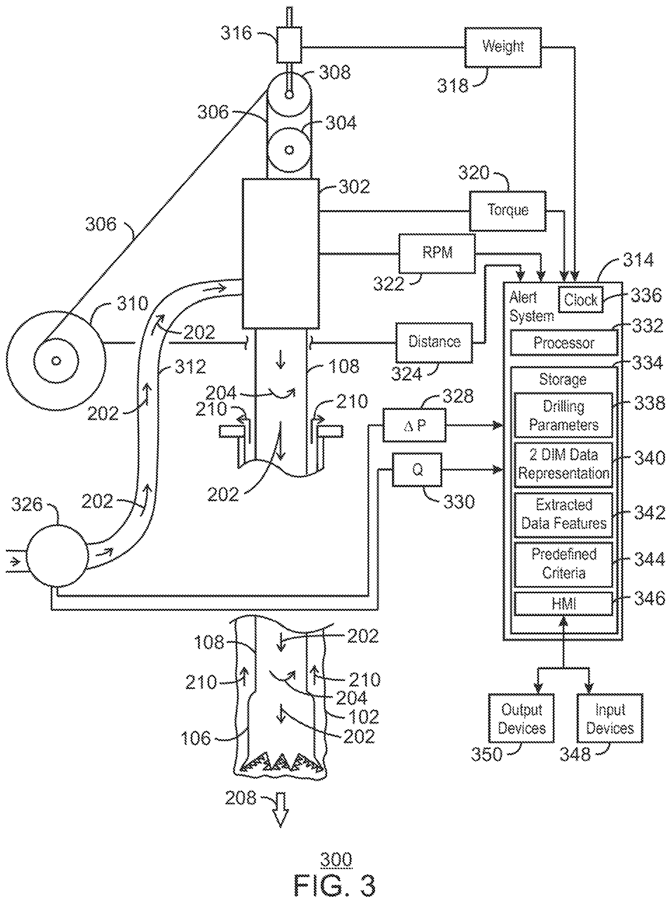

At the surface **114,** a drilling rig **116** is used to suspend the drillstring **108** and drill bit **106.** Equipment **118** on the drilling rig **116** is used to rotate the drillstring **108,** pump fluids through the drillstring **108,** and measure drilling parameters, such as the weight-on-bit (WOB), rotation rates (RPM), pressures, torques, bit position, and the like. This is discussed further with respect to **Fig. 3.** Various drilling dysfunctions can arise during the drilling procedures that affect the efficiency of the drilling operation **100.** For example, binding of the bit or drillstring **108** along the wellbore **102** in either the casing segments **110** or in the openhole wellbore **102** may lead to stick-slip behavior. Further, the drill bit **106** can develop some plugging, or bit balling, from agglomeration of tailings, especially in the presence of aqueous drilling fluids. This is discussed further with respect to **Figs. 2A** and **2B** for a close up view **120** of the drill bit **106.**

**Figs. 2A** and **2B** are drawings showing the occurrence of bit balling during a drilling operation **100.** Like numbered items are as discussed with respect to **Fig. 1. Fig. 2A** is a drawing of a normal drilling operation **100.** During this operation, fresh drilling mud **202** is flowed through the drillstring **108** to the drill bit **106,** and out through nozzles in the drill bit **106.** As the drillstring **108** is rotated, as indicated by an arrow **204,** the drill bit **106** abrades the subsurface layers **206,** allowing the drill bit **106** to proceed forward into the subsurface layers **206,** as indicated by an arrow **208.** The tailings from the drilling operation **100** are swept from the drill bit **106** by the fresh drilling mud **202,** and carried back up the wellbore **102** as a tailings slurry **210.**

However, certain subsurface layers **206** may be susceptible to agglomeration after abrasion by the drill bit **106.** For example, materials formed from clays, including shale, can form agglomerates that can plug the drill bit **106** by sticking in the teeth **212** or in slots in the body **214,** which is termed bit balling. The bit balling decreases the efficiency of the drilling operation **100,** slowing, or even stopping, the forward advance of the drill bit **106,** as indicated by an arrow **216.** If detected in time, the bit balling can be reversed, for example, by lifting the drill bit **106** from the bottom of the borehole **102** and washing the drill bit **106** with the flow of the drilling mud **202.** However, if the bit balling is not detected in time, it may form a permanent plug that cannot be reversed. In this case, the drillstring **108** must be pulled from the borehole **102** so that the drill bit **106** can be cleaned or exchanged. Accordingly, the early detection of downhole drilling dysfunctions can substantially lower costs associated with drilling wells. Embodiments described herein use surface instrumentation to detect drilling dysfunctions before they become problematic.

**Fig. 3** is a schematic of a drilling rig **300** that is equipped for detecting a downhole bit dysfunction. Like numbered items are as described with respect to **Figs. 1** and **2.** It can be understood that not all of the parts of the drilling rig **300** are shown, nor are the parts shown in the precise positions they would be on the drilling rig **300.** Further, different parts may be used in place of some of the parts shown. For example, as shown in **Fig. 3,** the drill string **108** is rotated by a top drive **302,** but a Kelly drive and rotary table may be used instead of or in addition to the top drive **302.** The top drive **302** is suspended from a travelling block **304** by a drill line **306.** A crown block **308** is used with the travelling block **304** to raise and lower the top drive **302** and the attached drill string **108.** The drill line **306** is reeled in or out from a draw-works **310,** powered by a motor (not shown). Drilling mud **202,** or other drilling fluid, is pumped to the top drive **302** through a Kelly hose **312.**

Any number of sensors may be used on the drilling rig **300** to determine various drilling parameters during a drilling operation. The drilling parameters can then be provided to a computing system **314** that uses the parameters to implement the techniques described herein. These sensors can include a strain gauge **316** that is incorporated into the support of the crown block **308.** The strain gauge **316** can provide a measurement to a processing unit that can determine weight **318,** which can be used to determine the weight-on-bit (WOB). Alternatively, the tension in the deadline can be measured. The top drive **302,** or a rotary table, can incorporate sensors that provide information used by processing units to determine torque **320** and rotational speed (RPM) **322.** The draw-works **310** can incorporate sensors that measure the amount of drill line **306** that has been played out or reeled in, which can be used by a processing unit to determine the distance **324** to the drill bit **106,** which can be used to provide the measurement of the distance to the bottom of the borehole **102** and the rate of penetration (ROP), among others. Sensors **326** incorporated into the flow of the drilling mud **202,** for example, before the Kelly line **312,** can provide data to processing units to determine the difference in pressure (ΔP) **328** between the drilling mud **202** provided to the drillstring **108** and the pressure in the wellbore **102** outside the drillstring **108.** Further, the sensor **326** on the drilling mud **202** can provide the flow rate (Q) **330** of the drilling mud **202** provided to the drillstring **108.**

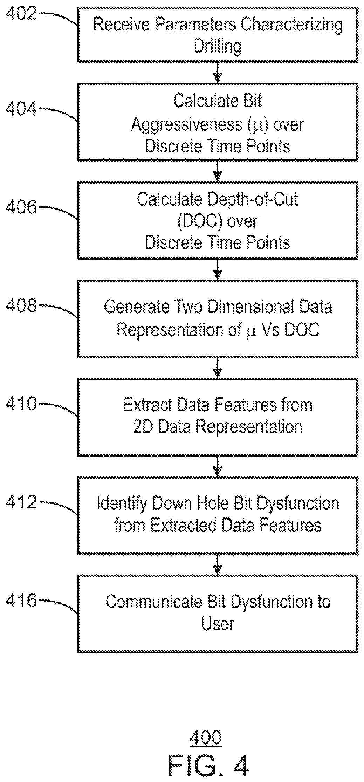

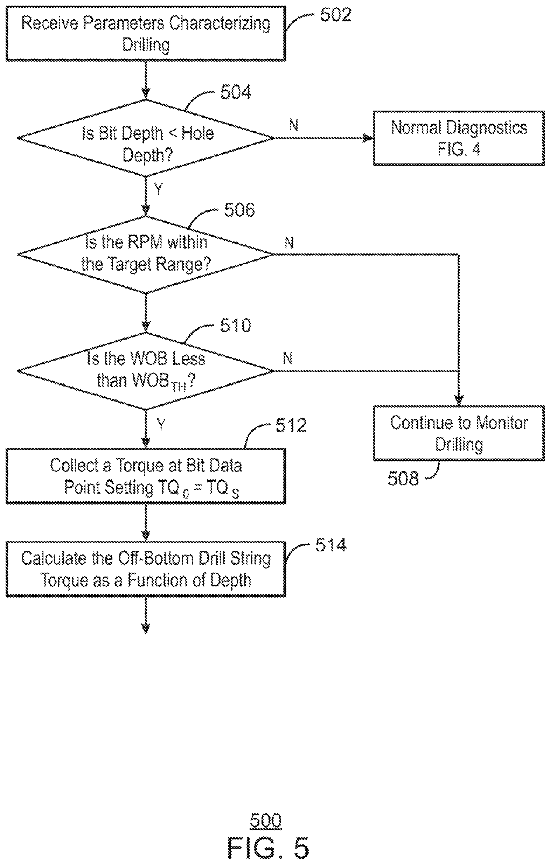

The computing system **314** implements the methods described herein, for example, with respect to **Figs. 4** and **5.** The computing system **314** may be a standalone computer, a part of a distributed control system (DCS), a programmable logic controller (PLC), or any number of other systems. The computer system **314** includes a processor **332** configured to execute machine readable instructions provided in a storage system **334.** The processor **332** can be a single core processor, a multi-core processor, a virtual processor in a cloud computing system, an application specific integrated circuit (ASIC), or any number of other units. A clock **336** function can be used by the processor to collect time stamped data sets, which can be used to determine bit dysfunctions over time.

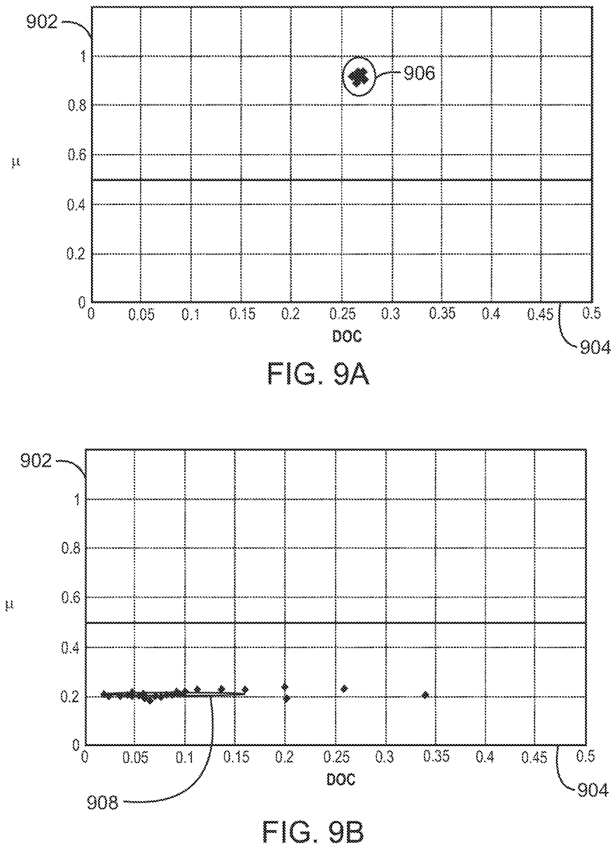

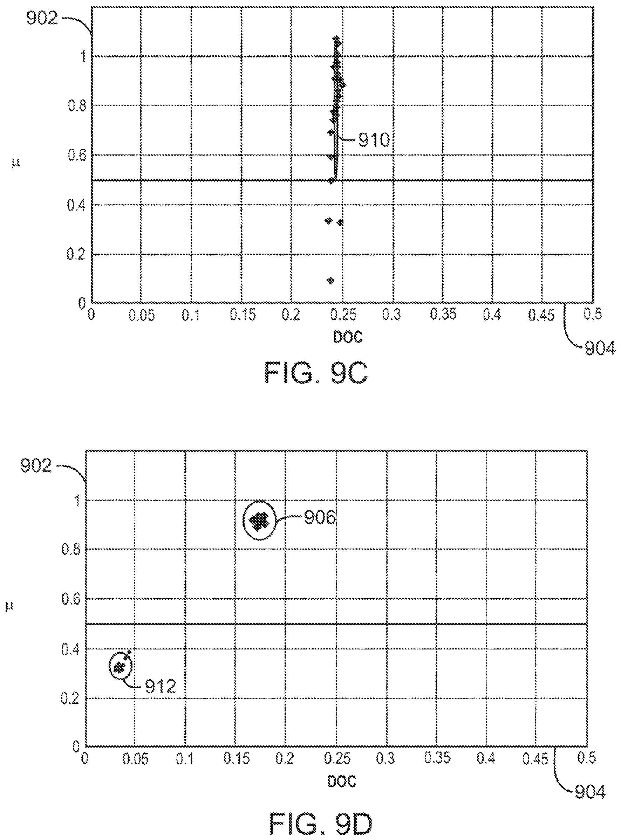

The storage system **334** can include random access memory (RAM), read only memory (ROM), hard drives, optical drives, RAM drives, virtual drives in a cloud computing configuration, or any number of other storage systems. The storage system **334** can hold the code and data blocks used to implement the methods, including a code for obtaining and storing drilling parameters **338.** The drilling parameters **338** can be used by code blocks that generate the two-dimensional data representation **340** of $\mu$ vs. DOC, for example, by generating each of $\mu$ and DOC at a plurality of time points. Similarly, diagnostic plots of $\mu$ versus $\dot{\mu}$ or $d\mu/dt$, i.e., the phase plane of $\mu$, may be determined, as well as other plots of this nature. The two-dimensional (2D) data representation **340** can be printed out as a functional map, but is generally used as a correlation matrix within the computing system **314.** Although discussed herein as a two-dimensional data representation, it can be understood that this is merely the base representation, and the techniques are not limited to a 2D data representation **340.** Additional data correlations (axes) can be added to the matrix to form a three-dimensional, four dimensional, or any higher multi-dimensional representation for diagnosing additional dysfunctions. An exemplary 3D display is a plot of DOC versus $\mu$ versus $\dot{\mu}$. The 2D data representation **340** can be used to obtain extracted data features **342,** for example, using code blocks that can implement calculations to determine an average mean, a median mean, a standard deviation, a peak-to-peak (or min-max) value, an eigenvalue, an eigenvector, a principal component vector, a support vector machine (SVM), a first or second order numerical time derivative, or a neural network, or any combinations thereof. The extracted data features **342** can be compared to a database of predefined criteria **344** that indicate the presence of certain bit dysfunctions, as discussed further with respect to **Fig. 9.**

The results can be provided to a user, such as a drilling operator or engineer, through a human machine interface (HMI) **346.** The HMI **346** provides an interface between the computing system **314** and various input devices **348** and output devices **350.** The input devices **348** can include keyboards and pointing devices used to provide input and configuration data to the computing system **314.** The output devices **350** can include a display, an audible tone generator, an electronic mail interface, or a phone interface, or any combinations thereof. Accordingly, warnings can be communicated to a user as a screen change, a tone, a pager signal, a text message, an e-mail, or as any other types of communications.

**Fig. 4** is a process flow diagram of a method **400** of detecting a downhole bit dysfunction in a drill bit penetrating a subterranean formation. The method begins at block **402** with a computing system, for example, as described with respect to **Fig. 3,** receiving a number of measured or calculated drilling parameters that characterize a wellbore drilling operation. These parameters can include a surface torque ($TQ_s$), a downhole bit torque ($TQ_b$), a weight on bit (WOB), a drillstring rotation rate (RPM), a rate of penetration (ROP), a time, a hole depth, a bit depth, or a depth-of-cut (DOC), or any combinations thereof. The surface torque ($TQ_s$) can be used to calculate the downhole bit torque ($TQ_b$) according to the method described with respect to **Fig. 5.**

At block **404,** the bit aggressiveness ($\mu$) is calculated at each of the discrete time points for which data is collected. Bit aggressiveness has been used by bit manufacturers as one of the bit specifications. Bit aggressiveness is dimensionless, which may allow cross comparison between different bits and different fields. It can be calculated by the formula shown in Eqn. 1.

$$\mu = 3\frac{TQ_b}{WOB\cdot\mathrm{d}} \qquad\qquad\qquad \text{Eqn. 1}$$

In Eqn. 1, $TQ_b$ is the downhole bit torque resulting from bit-formation interaction, and d is the bit diameter, e.g., the hole size. The surface torque $TQ_s$ can be inserted into Eqn. 1 to monitor a bit status while drilling. However, this overestimates $\mu$, because the surface torque is a summation of the bit torque $TQ_b$ and the off-bottom drillstring torque $TQ_0$, which is induced by string-formation interaction. Further, the surface torque is not appropriate for drilling using a mud motor, as the relevant torque is provided by the mud motor itself. Note that, if downhole tools provide measurements of downhole bit torque and weight on bit, then the bit friction $\mu$ can be readily calculated from this data.

At block **406,** the DOC is calculated at each of the discrete time points for which data is collected. For a drilling operation that does not use a downhole motor, the DOC can be calculated as the ratio of ROP to surface RPM. If a downhole motor (or mud motor) is used, the DOC can be calculated as the ratio of ROP to (RPM + $K_N$*Q), wherein $K_N$ is the ratio of mud motor speed to the total flow rate Q. The term $K_N$ is a specification value for the mud motor that is provided by the manufacturer.

At block **408,** the 2D data representation of $\mu$ versus DOC is generated. Since other parameters are also sensitive to bit balling and stick-slip, one dimension can be $\mu$ and the other can be another parameter sensitive to drilling dysfunctions, such as DOC, normalized DOC (DOC divided by a bit or cutter dimension), ROP, and normalized ROP (ROP divided by a wellbore diameter), WOB, MSE, and the numerical time derivatives of any of these parameters. For example, low bit aggressiveness $\mu$ and erratic DOC may indicate a bit balling event.

As noted previously, any number of other dimensions may be added to assist in diagnosing downhole dysfunctions, such as a time or depth dimension added to track changes in $\mu$ over time or depth. Further, $\mu$ can be used to monitor other downhole dysfunctions. For example, the fluctuations of $\mu$ can also indicate the existence and severity of stick-slip since the surface torque ($TQ_s$) is sensitive to torsional vibrations. Additionally, the trend of $\mu$ is sensitive to bit dulling or wearing conditions. To create the dynamic 2D data representation, both real-time $\mu$ and DOC are collected in a first-in-first-out (FIFO) data buffer to create a moving window. The window length may be 30 seconds to a few minutes for time based data, or a few feet for depth based data. In some applications, shorter or longer window lengths may be appropriate.

At block **410,** data features are extracted from the 2D data representation or the time windowed data, or both. For the 2D data representation, the extracted data features can include an eigenvalue, an eigenvector, a principal component vector calculated via principal component analysis (PCA). Other extracted data features can be used in a support vector machine (SVM) or a neural network. Further, the extracted features may include the center of the windowed data from the diagnostic plot. The data center may be calculated via an average mean or a median mean. The extracted features may also include standard deviations or peak-to-peak values for $\mu$ and the other parameter, such as DOC, among others.

For the time-windowed data, the extracted features may include an average mean, a median mean, a standard deviation, a peak-to-peak (or min-max) value, or any combinations thereof. For example, the mean of $\mu$ in the time domain or depth domain may be extracted. The mean may be an average or a median of the windowed data, or both. The extracted data may include a standard deviation of $\mu$, a peak-to-peak value, sometimes called min-max value of $\mu$. A long-term mean of $\mu$ may also be calculated. The definition of a long-term interval may depend on the type of drilling data, ROP, and other factors. For example, a long-term interval may be defined as about 12 to 24 hours for time based data, and about 100 feet (about 33 m) or 500 feet (about 165 m) for depth based data. In some applications, shorter or longer interval lengths may be appropriate. The mean may be an average or a median of the long-term interval data. The long term mean of $\mu$ can be used to calculate a long term drop rate.

At block **412,** the extracted data features are used to identify downhole dysfunctions, such as bit balling or stick-slip. The use of extracted patterns from the 2D data representations can include such predefined criteria as changes in the location of the data center, the location and size of a principal vector, changes in noise, and the like. For example, if the data center becomes lower than a selected threshold, such as about 0.5, or suddenly drops below a threshold for the value of $\mu$, such as about 0.4, a bit-balling alarm event can be identified. As another indicator, if the principal vector turns to lie along the DOC axis, and the principal value exceeds a certain threshold, this indicates a bit balling event is occurring. Further, if the data becomes very noisy along the $\mu$-axis, for example, if the standard deviation or peak-to-peak value of $\mu$ exceeds a certain threshold (such as about 0.2), a stick-slip event is indicated.

For data in the time domain, bit balling events may be identified by tracking the mean of the moving-windowed $\mu$ in the time domain, the depth domain, or both. Filters, such as a lower pass filter, a wavelet filter, or a median filter may be needed to remove unwanted noise from $\mu$. Generally, the value for $\mu$ is in a range of about 0.8 to about 1.6 for a clean, sharp PDC bit; about 0.2 to 0.5 for a dull PDC bit; about 0.3 to 0.4 for a diamond impregnated bit; and about 0.15 to 0.25 for a roller cone bit. If the current mean of $\mu$ becomes lower than a selected threshold, such as about 0.5 for a PDC bit for example, a bit-balling event can be identified. Alternatively, a self-comparison method can be used. If the current mean of $\mu$ drops by a selected value, such as about 0.4, or perhaps by a factor of 2 for example, then a bit-balling event can also be identified.

Stick-slip events can be detected by tracking fluctuations in the value of $\mu$ in the time domain. The fluctuations may be quantified via a standard deviation and/or peak-to-peak value. If the fluctuation of $\mu$ exceeds a certain threshold, such as about 0.2 for a PDC bit for example, then a stick-slip event can be identified. In addition to the diagnostic plot of $\mu$ vs. DOC, another method to determine stick-slip is to evaluate the phase plane plot of $\mu$ versus $\dot{\mu}$, or $d\mu/dt$, and to identify trajectories that depart more than a pre-defined criteria from a circular pattern, such as a circle of diameter 0.5.

The phase-space is a useful tool for analyzing nonlinear vibrations and modeling system dynamics. The phase-space of a 2-D coordinate system is called a phase plane where the two variables are the original signal and its first order time derivative. In this case, a sketch of the phase portrait may give qualitative and quantitative information about the dynamics of the system. Since the time derivative magnifies the noise, a low-pass filter is needed.

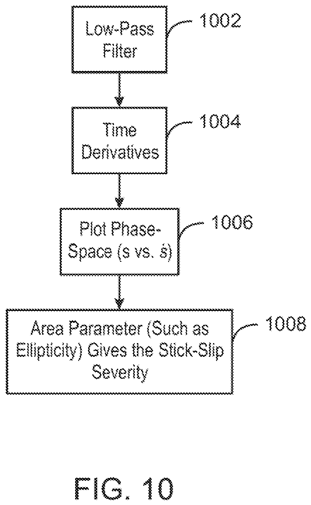

**Fig. 10** shows the algorithm diagram, where S(t) is a raw signal that could be either $\mu$ or surface torque $TQ_s$. The benefit of using the non-dimensional parameter $\mu$ is that it is normalized for the effect of changes in WOB and may also offer generalized results to allow comparison between different bits and different borehole intervals. Depending on the surface data acquisition system, the sampling rate $f_s$ may be 1Hz or 10 Hz. Slower sampling rates will likely be inadequate for this purpose.

The low-pass filter is used to remove the unwanted noise from S(t) before taking the time derivative. To preserve the phase of the filtered signal s(t), a linear phase filter - FIR (Finite Impulse Response) filter is used. Other filters such as wavelet filters may also be suitable for this application.

After taking the time derivative and mapping s(t) in the phase plane, the area cycled by the phase portrait indicates the stick-slip severity. The area grows with the stick-slip severity and the area collapses when the stick-slip decreases. Area parameters are defined to quantify the estimate of downhole stick-slip. The ellipticity of the phase plane can also be used to diagnose the stick-slip severity. If circular, then the torsional response of the drill string is simple harmonic motion, and the "stuck time" is nearly zero. As the ellipticity increases, the stuck time increases and the torsional response is no longer simple harmonic motion.

Bit dulling and wearing events are detected by tracking the long-term drop rate of $\mu$ in the time domain, depth domain, or both. A bit wearing event develops more gradually than a bit balling event, so the long term drop rate of $\mu$ can be an effective indication. Filters, such as a lower pass filter, a wavelet filter, or a median filter, or comparing the short-term average (STA) to a long-term average (LTA), may be needed to remove unwanted noise from $\mu$ to identify a significant change in the presence of noise. The value of the drop in $\mu$ correlates with the severity of the bit dulling or wearing: the higher the long-term drop rate of $\mu$, the worse the bit is wearing. If the long-term drop rate of $\mu$ exceeds a certain threshold, then a bit dulling/wearing event is identified. Bit dulling events are monotonic and irreversible. The value of $\mu$ will decrease slowly with time for bit dulling events and not recover when corrective actions are taken for balling.

At block **416,** the drilling dysfunction is reported to a user, such as a drilling operator or an engineer. The communication may be performed as an indicator on a display, an audio signal, a page, a text message, an e-mail, or any number of other alerts.

Extracting Bit Torque $TQ_b$ for Non-Motor Drilling

**Fig. 5** is a process flow diagram of a method 500 for automatically determining off-bottom drillstring torque TQ0 for a non-motorized drilling operation. To calculate an accurate value for $\mu$, an accurate value for the downhole bit torque $TQ_0$ is needed. There have been a number of methods used to obtain the $TQ_0$. One method is to obtain $TQ_0$ as a function of measured depth from a torque and drag model, which may be commercially available. The off-bottom drillstring torque may be fit to a function, such as a polynomial function, to the plurality of off-bottom drillstring torque data points by adjusting the friction coefficient $\mu$ until some minimum fit error criterion is achieved. Least squares methods are typically used in this fashion, but other optimization methods may be devised, such as piece-wise methods in which the friction coefficient is determined using data over adjacent intervals.

However, some model parameters, such as the friction coefficient for the pipe contact with the wellbore, need to be determined from the dataset. Another method is to manually log the off-bottom torque after making connections. This method is based on direct measurement but requires additional effort from the driller. In addition, the manual logging may introduce human error and contaminate the results. Embodiments described herein use a new method to obtain the downhole bit torque $TQ_b$ for non-motor drilling applications.

The method **500** begins at block **502** with receiving parameters that characterize the drilling operation. These parameters are the same as those discussed with respect to block **402** of **Fig. 4.**

Generally, the downhole bit torque, $TQ_b$, can be determined by subtracting the off-bottom drillstring torque, $TQ_0$, from the surface torque, $TQ_s$, according to the formula: $TQ_b = TQ_s - TQ_0$. However, obtaining an accurate value for $TQ_0$ may be problematic. In one embodiment, $TQ_0$ is automatically determined by measured surface torque, e.g., $TQ_0 = TQ_s$, only if a number of off-bottom rotation conditions are met.

These conditions focus on the bit depth, the drillstring rotation rate (RPM), and the weight-on-bit (WOB). To measure the off-bottom drillstring torque, the drillstring must be pulled off the bottom. Accordingly, at block **504,** a determination is made as to whether the bit depth < hole depth. If not, process flow returns to **Fig. 4** to calculate the diagnostics.

If, at block **504,** it is determined that the bit is off the bottom, process flow proceeds to block **506** to determine whether the drillstring rotation rate is within a target range. In one embodiment, a target range for the RPM is determined as $|RPM - RPM_0| \leq \Delta RPM$, wherein $\Delta RPM$ is a selected tolerance band, and $RPM_0$ is a nominal off-bottom rotation RPM. If $\Delta RPM$ is too high, then the string may be in a stick-slip condition and the measured values of torque will be fluctuating, and the average torque value will be too high. The tolerance band, $\Delta RPM$, can be about 10, about 5, about 2, or about 1. In another embodiment, the target range for the RPM is determined as
$RPM > RPM_{TH}$, wherein $RPM_{TH}$ is a threshold value for the RPM. The threshold value for the RPM may be a certain percentage of the normal drilling RPM, such as about 50 %, about 60 %, about 70 %, or higher. If the RPM is not within the target range, process flow proceeds to block **508** to continue to monitor drilling operations, for example, to continue either monitoring diagnostics, or to determine $TQ_0$.

If at block **506,** it is determined that the RPM is within the target range, at block **510** a determination is made as to whether the WOB is less than a threshold value, $WOB_{TH}$. This provides a confirmation that the bit is not in contact with the bottom of the wellbore. An ideal $WOB_{TH}$ should be zero, indicating no weight applied to the bit. However, in some embodiments, the $WOB_{TH}$ may be about 980 N, about 2450 N, about 4900 N about 9800 N ( about 100 kg, about 250 kg, about 500 kg, about 1000 kg) or higher, depending on the well configuration. Note that the zero value of WOB is typically set by the driller in the off-bottom condition, so the WOB value may depend on how recently the WOB was re-zeroed. The WOB zero value may also vary with changes in the density of fluids in the wellbore due to changing buoyancy forces. Fluid density in the wellbore can vary for several reasons. If the WOB is less than $WOB_{TH}$, a data point is collected at which $TQ_0$ is set equal to $TQ_s$ at block **512.** If not, process flow proceeds to block **508** to continue to monitor the drilling.

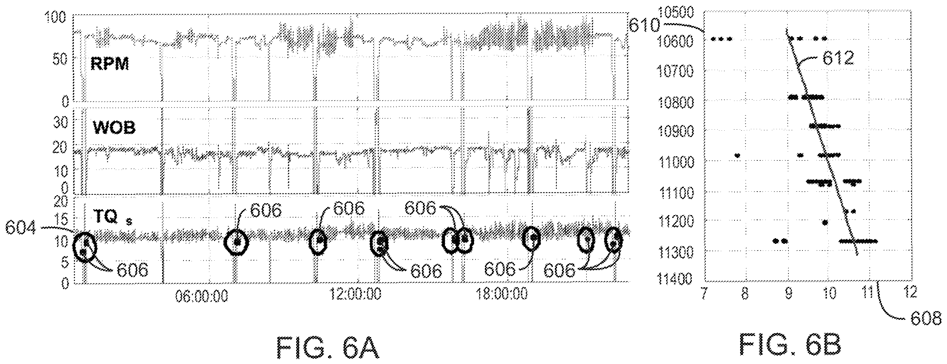

After extracting $TQ_0$ data points, at block **514,** a function of measured depth is calibrated to fit $TQ_0$, and this function is used to calculate $TQ_0$ where the bit will be penetrating the formation. Depending on the well profile, the interpolated function may be piecewise linear for a vertical hole and piecewise quadratic or exponential for a deviated hole section. An example of a piecewise linear function is one where the mean $TQ_0$ of a set of data points is held constant over an interval of depth until there is a change to the mean $TQ_0$ of a different set of data points, which is then held constant for a subsequent interval of depth. In another variation, a drillstring torque and drag model may be used to compare with the series of off-bottom torque measurements, wherein a regression fit to the model results provides a physics-based estimate of $TQ_0$. The off-bottom drillstring torque may be fit to a function, such as a polynomial function, of the plurality of off-bottom drillstring torque data points by adjusting the friction coefficient $\mu$ until some minimum fit error criterion is achieved. Least squares methods are typically used in this fashion, but other optimization methods may be devised, such as piece-wise methods in which the friction coefficient is determined using data over adjacent intervals. The predictive function can then be used to calculate $TQ_0$ where the bit will be penetrating the formation. This is further discussed with respect to **Figs. 6A** and **6B** in the examples below.

Estimating $TQ_b$ for Motor Drilling

In motor drilling applications, the bit torque is easier to obtain since we do not need to estimate $TQ_0$. The value for $TQ_b$ can be calculated from the specifications of the mud motor using the formula in Eqn. 2.

$$TQ_b = TQ_{max} * \Delta P / \Delta P_{max} \qquad \text{Eqn. 2}$$

In Eqn. 2, where $TQ_{max}$ is the mud motor maximum-rated torque, $\Delta P$ is the differential pressure across the motor (the difference between on bottom drilling pressure and off bottom circulating pressure), and $\Delta P_{max}$ is the mud motor maximum-rated differential pressure. Examples

The techniques described herein were tested using field data previously recorded at the surface for the drilling of a 9-7/8" intermediate hole. All the surface channels were sampled at 1 Hz. Since there was no mud motor in the drillstring, the off-bottom torque $TQ_0$ was extracted from the surface torque $TQ_s$ using the method **500** described with respect to **Fig. 5**. The conditions used for determining when to record $TQ_s$ as $TQ_0$ were $RPM_0$ = 50, $\Delta$ RPM = 10, and $WOB_{TH}$ = 8,89 kN (2 klbs).

**Figs. 6A** and **6B** are plots illustrating the automatic extraction of the off-bottom torque $TQ_0$ from the surface torque $TQ_s$. **Fig. 6A** is a trace of various drilling parameters against a time axis **602**. The surface torque, $TQ_s$, is represented along the y-axis **604** of the torque plot in **Fig. 6A**. At each of the extracted data points **606**, the drill bit had been lifted from the bottom and both the RPM and WOB are within target ranges, allowing a measurement of $TQ_0$.

The data points **606** were used to generate a regression plot, shown in **Fig. 6B**. The x-axis **608** of the regression plot represents the off-bottom torque, $TQ_0$, while the y-axis **610** represents the depth, for example, in feet. In this example, a linear regression **612** generated a function that was used to predict a value for $TQ_0$ from depth: $TQ_0$ = 0.0022797*D-15.0848. This was then used with the surface torque to generate $TQ_b$ as $TQ_s$ - $TQ_0$.

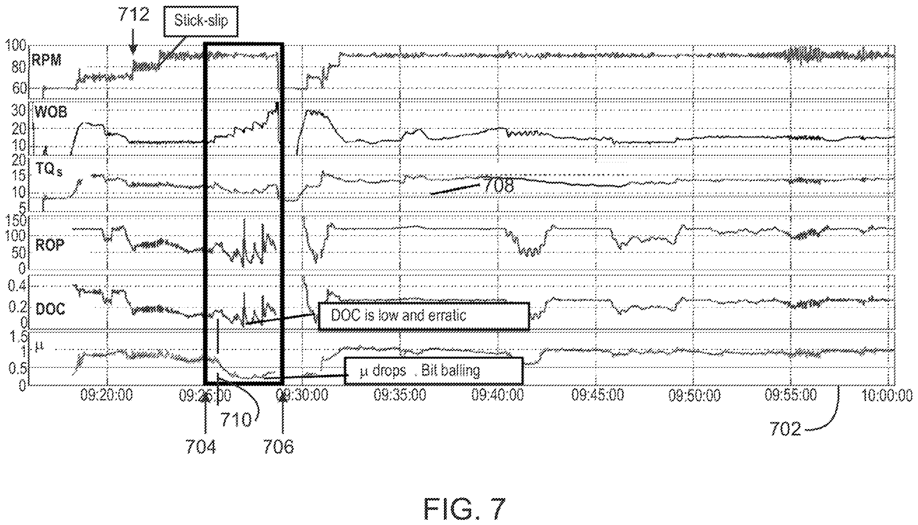

**Fig. 7** is a plot illustrating changes in the bit aggressiveness ($\mu$) and other drilling parameters in the time domain for an incipient bit balling event. The x-axis **702** in each plot represents time. It can be seen that for most of the time, $\mu$ was stable at about 1.0, which falls into a fully operational range of $\mu$ of about 0.8-1.6 for a clean, sharp PDC bit. It can be noted that the bit aggressiveness drops in a matter of five minutes or less for balling events.

As an example, during the time of about 9:25 **704** to 9:28 **706,** the driller increased the WOB from about 53.3 kN (about 12 klbs) to 133.4 kN (about 30 klbs). However, the surface torque $TQ_s$ did not increase correspondingly, but instead it decreased slightly. A potential risk of bit balling was identified at that time. The drill bit was raised off the bottom of the borehole, the drillstring was rotated at about 60 RPM for about 2 minutes, and then drilling was resumed. As a result, all surface drilling parameters returned to normal.

These facts indicated that this was a reversible or incipient bit balling event and that the immediate off-bottom rotation was an effective mitigation action. The line **708** on the surface torque subplot indicates the auto-extracted $TQ_0$. The calculated parameters DOC and $\mu$ are shown on the last two subplots, respectively. At about 9:26 **710,** $\mu$ started to drop and did not respond to any further increases in the WOB. In addition, the DOC curve became erratic. The value of $\mu$ decreased below 0.4 at about 9:27. After the driller fixed this incipient bit balling condition, $\mu$ returned to a normal value around 1.

Besides bit balling detection, **Fig. 7** also shows that monitoring $\mu$ can detect downhole stick-slip. At about 9:22 **712,** $\mu$ became noisy and indicated the occurrence of a stick-slip event. After that time, the peak-to-peak value (or min-max range) of $\mu$ was about 0.3, and the standard deviation of $\mu$ was about 0.22 higher than the normal value. The occurrence of stick-slip was verified by the incidence of high frequency fluctuations on RPM starting at 9:22. For this hole section, a stick-slip damping device was installed on the top drive. Having detected the occurrence of stick-slip, this device automatically tweaked the surface RPM, apparently making the RPM channel become noisy, to damp out the torsional vibrations from the drillstring.

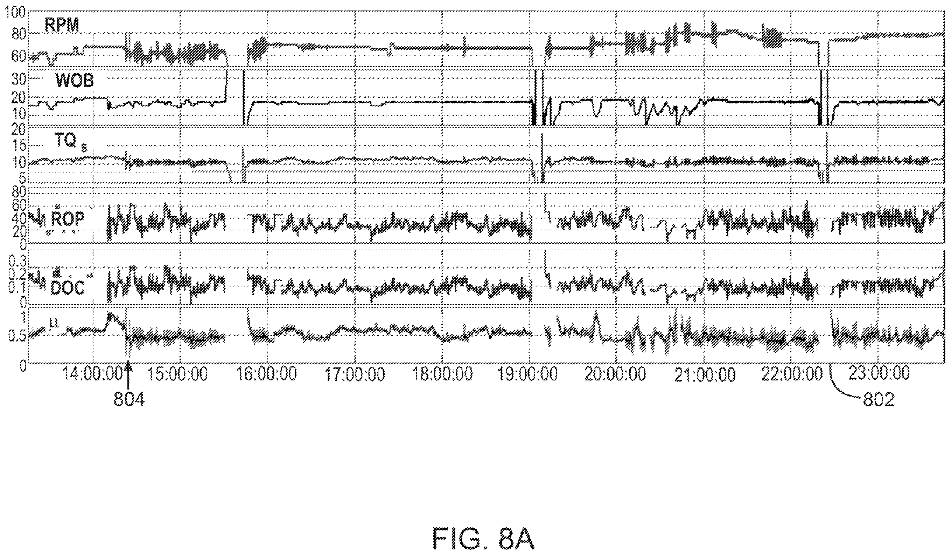

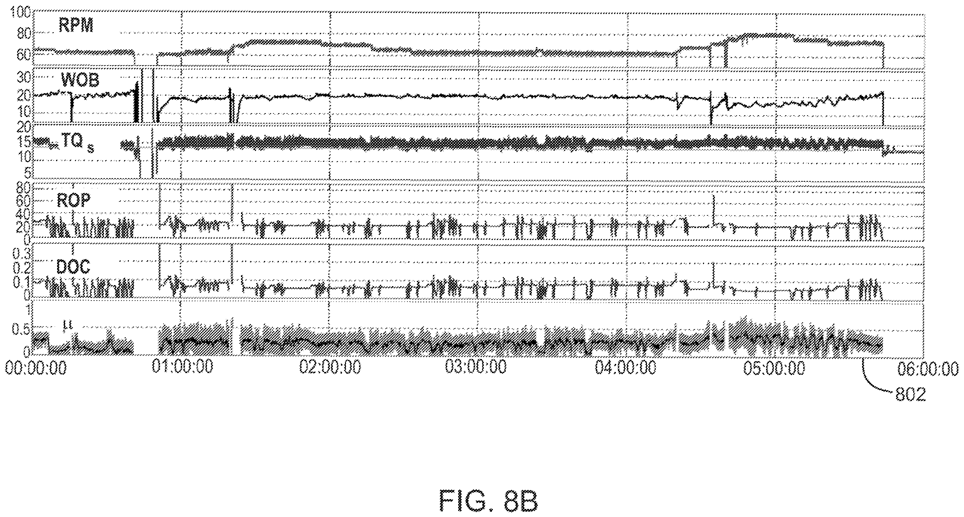

**Figs. 8A** and **8B** are plots illustrating changes in the bit aggressiveness ($\mu$) and other drilling parameters in time domain for stick-slip events and bit wearing events. Both sets of plots are against a time axis **802**. The plots demonstrate that monitoring $\mu$ can identify stick-slip events and bit wearing events. For these examples, field data was recorded at the surface from the drilling of a 6-1/8" production hole section, and all the surface channels were sampled at 1 Hz. **Fig. 8A** shows the drilling data recorded on 9/9/2011 at the beginning of the hole section. **Fig. 8B** displays the data recorded on 9/16/2011, the day the hole section was completed with the same bit.

The magnitude of the high frequency fluctuations in the value of $\mu$ indicates the severity of downhole stick-slip. **Fig. 8A** shows that a stick-slip event occurred at 14:20 **804** and continuously built up. About a week later on 9/16/2011, $\mu$ became much noisier with a standard deviation about 0.35, indicating that the stick-slip event worsened.

Additionally, the trend of the values of $\mu$ indicates a longer term bit dulling or wearing event. It can be noted that bit wearing events are not acute and may take hours for changes in $\mu$ to occur. For example, the daily average of $\mu$ on **Fig. 8A** was about 0.5, while a week later it dropped to 0.24, which was almost half of the initial value and indicated bit dulling. The indication from the calculation had good agreement with the field result. After the bit was tripped out of the hole, the IADC (International Association of Drilling Contractors) grading of the bit was rated as 2-5-BT-S-X-1-CT-TD, and some broken cutters were found. The first two digits of the IADC grade indicate dulling condition on inner and outer cutting structures, respective. The digit is a linear scale ranging from 0 to 8, i.e. 0 means no loss of cutters, and no worn or broken cutters, and 8 stands for totally lost or damaged cutters.

**Figs. 9A** - **9D** are diagnostic plots of $\mu$ against DOC, illustrating the differences between normal drilling and bit dysfunctions. In each plot, $\mu$ is shown on the y-axis **902** and DOC is shown on the x-axis **904**. The data window length was set at about 30 seconds. As shown in **Fig. 9A,** for a clean bit in good condition, the data clusters in a nearly circular fashion, with a center of the data cluster **906** at about $\mu$=0.9 and DOC = 0.26 in. **Fig. 9B** indicates the occurrence of a reversible bit balling event. The data was spread out along the DOC-axis, and the center of the $\mu$ values dropped from around 0.9 to around 0.2. Furthermore, the ellipse **908** represents the data features of eigenvalues and eigenvectors extracted by PCA. The principal vector turned parallel to the DOC-axis when bit balling occurred.

Other conditions can be determined from the diagnostic plots. In **Fig. 9C,** a spreading of the data along the $\mu$ axis, as indicated by an ellipse **910,** indicates the occurrence of a stick-slip event. Further, as shown in **Fig. 9D,** a significant shift of the data from the original data cluster **906** to a new data cluster **912** at a lower value on both the $\mu$ axis **902** and the DOC axis **904** indicates a bit wearing event. In practice, the plots do not have to be created, but may be used as 2D data representations to identify the conditions automatically. In this embodiment, the plots may be displayed after the conditions are detected to assist a user in understanding the condition and severity. Other plots may be used in addition to, or instead of, the diagnostic plot of $\mu$ versus DOC, such as $\mu$ versus its time derivative $\dot{\mu}$. This is discussed further with respect to **Figs. 10-12.**

**Fig. 10** is a block diagram of a method **1000** for using a diagnostic plot of $\mu$ in a phase plane ($\mu$ vs. $\dot{\mu}$). The method starts at block **1002** when a signal input, S(t), is run through a low-pass filter to remove high frequency signal components, forming a filtered signal s(t). At block **1004,** a time derivative s(t) is calculated from the filtered signal, s(t). At block **1006,** a phase space plot is generated, e.g., s(t) versus s(t). At block **1008,** an area parameter is used to identify the presence of a bit dysfunction, such as slip stick.

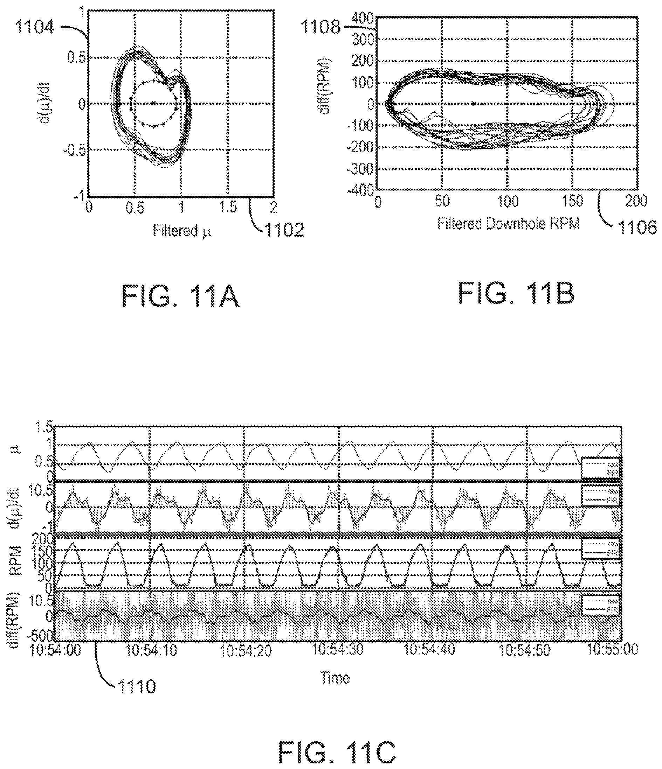

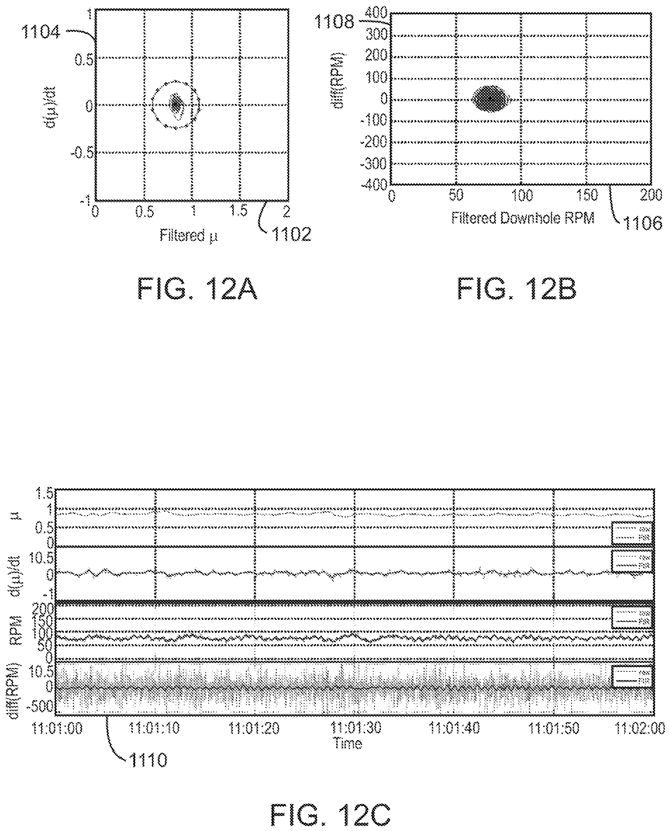

**Figs. 11** and **12** show two examples of stick-slip detection by using the diagnostic phase plane $\mu$ vs. $\dot{\mu}$ with field drilling data. The surface torque signal was sampled at 10 Hz. A downhole measurement sub was installed in the BHA to record the downhole vibration data at a higher sampling frequency of 50 Hz. Note that the downhole RPM signal is used here just to show the actual downhole stick-slip for verification, but it is not a required channel for this invention.

A Kaiser window-based FIR filter was used to remove unwanted noise from $\mu$ and downhole RPM signals. The cut-off frequencies are set at 1 Hz and 2Hz for the $\mu$ and the downhole RPM, respectively. **From Figs 11C** and **12C,** it can be seen that the FIR filter effectively removes the unwanted noise and does not induce any phase delay or distortion. The time-span associated with **Figs. 11** and **12** is one minute. The dotted circles with a diameter of 0.5 on **Figs. 11A** and **12A** are the predefined criteria indicating the critical condition of severe stick-slip.

**Figs. 11A-11C** are plots illustrating severe stick-slip events on the diagnostic phase plane of $\mu$ vs. $\dot{\mu}$. **Fig. 11A** is a phase plot in which the x-axis **1102** represents the filtered value for $\mu$, while the y-axis **1104** represents the time derivative, $\dot{\mu}$. In **Fig. 11A,** the large phase portrait on the phase plane indicates severe stick-slip. The enclosed area exceeds the predefined criteria circle marked as a dotted line with a diameter of 0.5.

**Fig. 11B** is a phase plot in which the x-axis **1106** represents the filtered value of the downhole rotation rate in RPM, while the y-axis **1108** represents the time derivative of the RPM, diff(RPM). The high ellipticity indicates severe downhole stick-slip.

**Fig. 11C** is a plot illustrating changes in the bit aggressiveness ($\mu$), bit RPM, and their corresponding time derivatives during a severe stick-slip event. In each plot, the unfiltered data is shown as the grayed lines and the filtered data is shown as a solid line. The large variations seen for both the filtered and unfiltered time derivative of the RPM verify the existence of severe stick-slip.

**Figs. 12A-12C** are plots illustrating a low stick-slip condition on the diagnostic phase plane of $\mu$ vs. $\dot{\mu}$. Like numbered values are as described with respect to **Fig. 11.** In

**Fig. 12A,** the small phase portrait on the phase plane indicates low stick-slip. The area of the slip stick is within the predefined criteria circle marked as a dotted line with a diameter of 0.5, indicating that the slip-stick is not a problem in this case. Further, the low ellipticity shown in **Fig. 12B** indicates a low value for the downhole slipstick. This is verified by the low variation seen for the RPM and time derivative of the RPM in **Fig. 12C.**

**Figs. 11** and **12** demonstrate the stick-slip detection from the calculated bit aggressiveness $\mu$ in the phase plane for severe and low stick-slip events, respectively. The stick-slip estimation matches well with actual severity observed in the downhole RPM measurements. As shown in **Fig. 11A,** when a severe stick-slip event occurs the area marked by the phase portrait exceeds the predefined circle, and its ellipticity also increases. On the other hand, the phase portrait area collapses within the predefined circle for the low stick-slip event in **Fig. 12A.**

It should be understood that the preceding is merely a detailed description of specific embodiments of this invention and the numerous changes, modifications, and alternatives to the disclosed embodiments can be made in accordance with the disclosure here without departing from the scope of the invention. Rather, the scope of the invention is to be determined only by the appended claims.

### Claims

**1.** A method (500) of automatically determining off-bottom drillstring torque (TQ0), the method comprising:

receiving data (502) regarding a plurality of drilling parameters characterizing a wellbore drilling operation, wherein the plurality of drilling parameters comprise a surface torque, a drillstring rotatory speed in a revolutions per minute (RPM), a weight on bit (WOB), a hole depth and a bit depth;

recording the surface torque as an off-bottom drillstring torque data point if:

the bit depth is less than the hole depth (504);
the RPM is within a target range (506); and
the WOB is less than a threshold value (510); and

calculating (514) the off-bottom drillstring torque as a function of depth from a plurality of off-bottom drillstring torque data points.

2. The method of claim 1, wherein the target range for the RPM is determined as $|RPM - RPM0| \leq \Delta RPM$, wherein $\Delta RPM$ is a selected tolerance band, and RPM0 is a nominal off-bottom rotation RPM.

3. The method of claim 1, wherein the target range for the RPM is determined as RPM > RPMTH, wherein RPMTH is a threshold value for the RPM.

4. The method of claim 1, wherein calculating the off-bottom drillstring torque is performed by fitting a function to the plurality of off-bottom drillstring torque data points.

5. The method of claim 4, wherein the function includes at least one of a linear equation, a polynomial equation, an exponential equation, a spline fit, and piecewise combinations thereof.

**Patentansprüche**

1. Verfahren (500) zum automatischen Ermitteln des Bohrstrangdrehmoments (TQ0) vom Boden weg, bei dem Daten (502) zu einer Vielzahl von Bohrparametern empfangen werden, die eine Bohroperation in einem Bohrloch charakterisieren, wobei die Vielzahl von Bohrparametern ein Oberflächendrehmoment, eine Rotationsgeschwindigkeit des Bohrstrangs in Umdrehungen pro Minute (RPM), eine Meißelbelastung (WOB), eine Lochtiefe und eine Meißeltiefe umfasst;

das Oberflächendrehmoment als Datenpunkt des Bohrstrangdrehmoments vom Boden weg aufgezeichnet wird, falls:

die Meißeltiefe kleiner als die Lochtiefe (504) ist;
die RPM innerhalb eines Zielbereichs (506) liegt; und
die WOB kleiner als ein Schwellenwert (510) ist; und
das Bohrstrangdrehmoment vom Boden weg als Funktion der Tiefe aus einer Vielzahl von Datenpunkten des Bohrstrangdrehmoments vom Boden weg berechnet (514) wird.

2. Verfahren nach Anspruch 1, bei dem der Zielbereich für die RPM als $|RPM - RPM0| \leq \Delta RPM$ ermittelt wird, wobei $\Delta RPM$ ein ausgewähltes Toleranzband ist und RPM0 eine nominelle Rotation vom Boden weg, RPM, ist.

3. Verfahren nach Anspruch 1, bei dem der Zielbereich für die RPM als RPM > RPMTH ermittelt wird, wobei RPMTH ein Schwellenwert für die RPM ist.

4. Verfahren nach Anspruch 1, bei dem das Berechnen des Bohrstrangdrehmoments vom Boden weg durchgeführt wird, indem eine Funktion an die Vielzahl der Datenpunkte des Bohrstrangdrehmoments vom Boden weg angepasst wird.

5. Verfahren nach Anspruch 4, bei dem die Funktion mindestens eine von einer linearen Gleichung, einer Polynomgleichung, einer Exponentialgleichung, einer Spline-Anpassung sowie stückweisen Kombinationen davon einschließt.

**Revendications**

1. Procédé (500) de détermination automatique d'un couple de train de tiges de forage au-dessus du fond (TQ0), le procédé comprenant :

la réception de données (502) concernant une pluralité de paramètres de forage caractérisant une opération de forage de puits, la pluralité de paramètres de forage comprenant un couple en surface, une vitesse de rotation de train de tiges de forage en tours par minute (RPM), un poids sur l'outil (WOB), une profondeur de trou et une profondeur d'outil ;

l'enregistrement du couple en surface comme une valeur mesurée de couple de train de tiges de forage au-dessus du fond si :

la profondeur d'outil est inférieure à la profondeur de trou (504) ;
les RPM se situent à l'intérieur d'une gamme cible (506) ; et
le WOB est inférieur à une valeur seuil (510) ; et

le calcul (514) du couple de train de tiges de forage au-dessus du fond en fonction de la profondeur à partir d'une pluralité de valeurs mesurées de couple de train de tiges de forage au-dessus du fond.

**2.** Procédé de la revendication 1, dans lequel la gamme cible pour les RPM est déterminée comme |RPM-RPM0| ≤ ΔRPM, ΔRPM étant une bande de tolérance sélectionnée, et RPM0 étant des RPM de rotation au-dessus du fond nominaux.

**3.** Procédé de la revendication 1, dans lequel la gamme cible pour les RPM est déterminée comme RPM > RPMTH, RPMTH étant une valeur seuil pour les RPM.

**4.** Procédé de la revendication 1, dans lequel le calcul du couple de train de tiges de forage au-dessus du fond est effectué en lissant avec une fonction la pluralité de valeurs mesurées de couple de train de tiges de forage au-dessus du fond.

**5.** Procédé de la revendication 4, dans lequel la fonction en comporte au moins une parmi une équation linéaire, une équation polynomiale, une expression exponentielle, un lissage spline, et des combinaisons par segments de ceux-ci.

100
FIG. 1

FIG. 2A

FIG. 2B

300
FIG. 3

402 — Receive Parameters Characterizing Drilling

404 — Calculate Bit Aggressiveness (μ) over Discrete Time Points

406 — Calculate Depth-of-Cut (DOC) over Discrete Time Points

408 — Generate Two Dimensional Data Representation of μ Vs DOC

410 — Extract Data Features from 2D Data Representation

412 — Identify Down Hole Bit Dysfunction from Extracted Data Features

416 — Communicate Bit Dysfunction to User

<u>400</u>
FIG. 4

Receive Parameters Characterizing Drilling — 502

Is Bit Depth < Hole Depth? — 504
N → Normal Diagnostics FIG. 4

Y

Is the RPM within the Target Range? — 506
N →

Is the WOB Less than $WOB_{TH}$? — 510
N →

Y

Collect a Torque at Bit Data Point Setting $TQ_0 = TQ_S$ — 512

Continue to Monitor Drilling — 508

Calculate the Off-Bottom Drill String Torque as a Function of Depth — 514

500
FIG. 5

FIG. 6A

FIG. 6B

FIG. 7

FIG. 8A

EP 3 196 406 B1

FIG. 8B

FIG. 9A

FIG. 9B

FIG. 9C

FIG. 9D

```
┌──────────────┐
│  Low-Pass    │ ── 1002
│   Filter     │
└──────┬───────┘
       │
       ▼
┌──────────────┐
│    Time      │ ── 1004
│ Derivatives  │
└──────┬───────┘
       │
       ▼
┌──────────────┐
│ Plot Phase-  │ ── 1006
│ Space (s vs. ṡ) │
└──────┬───────┘
       │
       ▼
┌────────────────────────────┐
│ Area Parameter (Such as     │ ── 1008
│ Ellipticity) Gives the Stick-Slip │
│         Severity            │
└────────────────────────────┘
```

FIG. 10

FIG. 11A

FIG. 11B

FIG. 11C

FIG. 12A

FIG. 12B

FIG. 12C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 61725900 A
- US 7857047 B
- US 7896105 B
- WO 2011016927 A
- WO 20110216928 A
- US 5474142 B, B. J. Bowden

### Non-patent literature cited in the description

- *Journal of Canadian Petroleum Technology,* vol. 45 (6), 26-30